# EUROPEAN PATENT APPLICATION

(11) **EP 3 128 347 A1**
(43) Date of publication of application: **08.02.2017**
(21) Application number: 15179937.6
(22) Date of filing: 06.08.2015
(51) Int. Cl.: G01T 1/204

(54) **AN APPARATUS FOR DETECTING X-RAYS AND METHOD OF PROVIDING AN APPARATUS FOR DETECTING X-RAYS**

(71) Applicant: Nokia Technologies Oy, 02610 Espoo (FI)
(72) Inventor: Bower, Chris, Ely, Cambridgeshire CB6 3EN (GB); Spigone, Elisabetta, Cambridge, Cambridgeshire CB1 2LL (GB); Malik, Surama, Cambridge, Cambridgeshire CB1 2FG (GB)
(74) Representative: Swindell & Pearson Limited

(57) **Abstract**

An apparatus (1) and method of providing an apparatus (1), the apparatus (1) comprising: a light guide structure (3) comprising a plurality of columnar discontinuities (7); liquid scintillator material (5) provided to generate photons (37) in response to incident X-rays (35) wherein the liquid scintillator material (5) is provided in a plurality of columns (9) within the columnar discontinuities (7) of the light guide structure (3); wherein the light guide structure (3) has a lower refractive index than the liquid scintillator material (5) so that photons (37) generated by the liquid scintillator material (5) are guided along a length of the columns (9) of liquid scintillator material (5).

## Description

### TECHNOLOGICAL FIELD

Examples of the disclosure relate to an apparatus for detecting X-rays and method of providing an apparatus for detecting X-rays. In particular, they relate to an apparatus for detecting X-rays and method of providing an apparatus for detecting X-rays comprising liquid scintillator material.

### BACKGROUND

Scintillators which are used to convert incident X-rays into photons are known. The photons generated by the scintillator may then be detected by a photodetector so that the photodetector provides an electrical signal indicative of the incident X-rays.

Common materials which may be used in scintillators comprise thallium doped caesium iodide (CsI:Tl). CsI:Tl has high efficiency of converting X-rays to photons however it has the disadvantages that the CsI:Tl crystals are brittle and hygroscopic and require high temperature growth processes. When forming CsI:Tl scintillators it is necessary to immediately encapsulate the CsI:Tl in order to prevent water ingress and decomposition of the CsI:Tl crystals.

It is useful to provide an improved scintillator apparatus and method of providing such apparatus.

### BRIEF SUMMARY

According to various, but not necessarily all, examples of the disclosure there may be provided an apparatus comprising: a light guide structure comprising a plurality of columnar discontinuities; liquid scintillator material provided to generate photons in response to incident X-rays wherein the liquid scintillator material is provided in a plurality of columns within the columnar discontinuities of the light guide structure; wherein the light guide structure has a lower refractive index than the liquid scintillator material so that photons generated by the liquid scintillator material are guided along a length of the columns of liquid scintillator material.

In some examples the apparatus may be coupled to a photodetector.

In some examples the apparatus may be removably coupled to a photodetector.

In some examples the photodetector may comprise graphene.

In some examples the columns of liquid scintillator material may be arranged in an array which has a different shape to an array of pixels within the photodetector.

In some examples a plurality of columns of liquid scintillator material may be arranged in an irregular array.

In some examples a reflective layer may be configured to reflect photons into the column of liquid scintillator material.

In some examples the apparatus may be flexible.

In some examples the apparatus may comprise a valve configured to enable the liquid scintillator material to be removed from the light guide structure.

In some examples wherein the light guide structure may comprise polymer.

In some examples wherein the light guide structure may comprise aluminium oxide. The light guide structure may be provided on an aluminium substrate. The aluminium substrate may be reflective.

In some examples the columns of the liquid scintillator material may be formed by phase separation.

In some examples the columns of the liquid scintillator material may be formed by ultra violet patterning.

In some examples the light guide structure may be formed by at least one of printing, embossing, nano-imprinting.

In some examples the light guide structure may be formed by embedding particles within a mixture comprising liquid scintillator material.

In some examples the columns of the liquid scintillator material may be hexagonal.

According to various, but not necessarily all, examples of the disclosure there may be provided an electronic device comprising an apparatus as described above.

According to various, but not necessarily all, examples of the disclosure there may be provided a method comprising: providing a light guide structure comprising a plurality of columnar discontinuities; providing liquid scintillator material for generating photons in response to incident X-rays wherein the liquid scintillator material is provided in a plurality of columns within the columnar discontinuities of the light guide structure; wherein the light guide structure has a lower refractive index than the liquid scintillator material so that photons generated by the liquid scintillator material are guided along a length of the columns of liquid scintillator material.

In some examples the method may comprise coupling a photodetector to the liquid scintillator material.

In some examples the method may comprise removably coupling a photodetector to the liquid scintillator material.

In some examples the photodetector may comprise graphene.

In some examples the columns of liquid scintillator material may be arranged in an array which has a different shape to an array of pixels within the photodetector.

In some examples the method may comprise providing a plurality of columns of liquid scintillator material arranged in an irregular array.

In some examples the method may comprise providing a reflective layer configured to reflect photons into the column of liquid scintillator material.

In some examples the light guide structure and liquid scintillator material are flexible.

In some examples the method may comprise providing a valve configured to enable the liquid scintillator material to be removed from the light guide structure.

In some examples wherein the light guide structure may comprise polymer.

In some examples the light guide structure may comprise aluminium oxide. The light guide structure may be provided on an aluminium substrate. The aluminium substrate may be reflective.

In some examples the method may comprise forming the columns of the liquid scintillator material by phase separation.

In some examples the method may comprise forming the columns of the liquid scintillator material by ultra violet patterning.

In some examples the method may comprise forming the light guide structure by printing.

In some examples the method may comprise forming the light guide structure by embedding particles within a mixture comprising liquid scintillator material.

In some examples the columns of the liquid scintillator material may be hexagonal.

According to various, but not necessarily all, examples of the disclosure there may be provided examples as claimed in the appended claims.

### BRIEF DESCRIPTION

For a better understanding of various examples that are useful for understanding the detailed description, reference will now be made by way of example only to the accompanying drawings in which:
Figs. 1A to 1C illustrate an apparatus;
Fig. 2 illustrates an apparatus coupled to a photodetector;
Figs. 3A to 3C illustrate an apparatus;
Figs. 4A to 4C illustrate an apparatus;
Figs. 5A and 5B illustrate an apparatus;
Figs. 6A and 6B illustrate an apparatus; and
Fig. 7 illustrates a method.

### DETAILED DESCRIPTION

The Figures illustrate an apparatus 1 and method of providing an apparatus 1. The apparatus 1 comprises: a light guide structure 3 comprising a plurality of columnar discontinuities 7; liquid scintillator material 5 provided to generate photons 37 in response to incident X-rays 35 wherein the liquid scintillator material 5 is provided in a plurality of columns within the columnar discontinuities 7 of the light guide structure 3; wherein the light guide structure 3 has a lower refractive index than the liquid scintillator material 5 so that photons 37 generated by the liquid scintillator material 5 are guided along a length of the columns of liquid scintillator material 5.

The apparatus 1 may be for detecting X-rays 35 or other high energy electromagnetic radiation. The apparatus 1 may be provided in an electronic device which may be configured to provide an electronic output indicative of the incident X-rays.

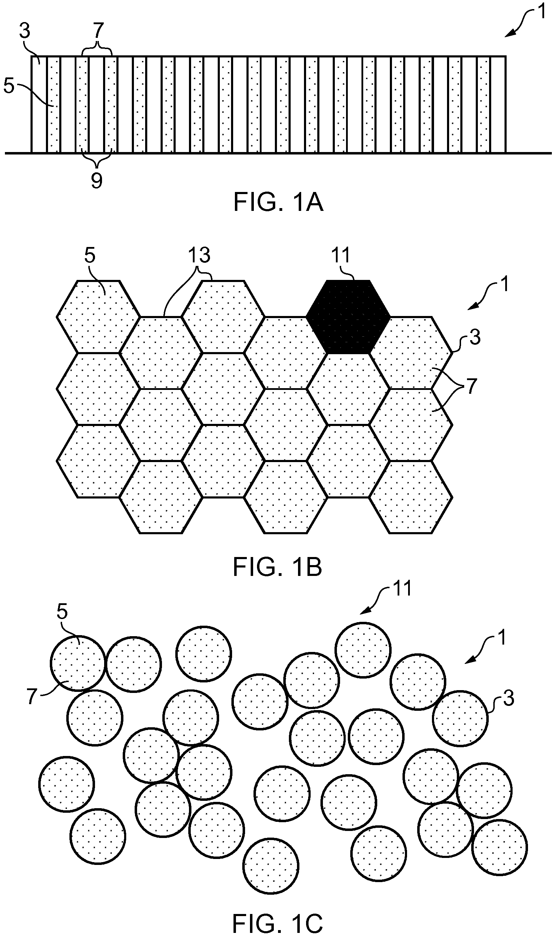

Figs. 1A to 1C illustrate an example apparatus 1. Fig. 1A illustrates a cross section though a portion of a scintillator apparatus 1, Fig. 1B illustrates a plan view of an apparatus 1 and Fig. 1C illustrates a plan view of another apparatus. It is to be appreciated that the apparatus 1 are not drawn to scale in the Figures.

The apparatus 1 comprises a light guide structure 3 and liquid scintillator material 5.

The light guide structure 3 may comprise any means which may be configured to guide light through liquid scintillator material 5. In some examples the light guide structure 3 may be configured to support the liquid scintillator material 5. The light guide structure 3 may comprise a plurality of discontinuities 7. The discontinuities 7 may comprise gaps within the light guide structure 3 which may be configured to receive liquid scintillator material 5.

The discontinuities 7 may be columnar. The columnar discontinuities 7 may have a high aspect ratio such the length of the discontinuity 7 is greater than the width. In some examples the length may be of the order of 100 times greater than the width. However it is to be appreciated that other aspect ratios may be used in other examples. The discontinuities may extend through the entire thickness of the light guide structure 3.

The discontinuities 7 within the light guide structure 3 may have any suitable shape. In the example of Figs. 1A and 1B the discontinuities 7 have a hexagonal cross section. In the example of Fig. 1C the discontinuities have a circular cross section. Other shapes may be used in other examples of the disclosure.

Any suitable material may be used for the light guide structure 3. The material which is used for the light guide structure 3 may depend on the material which is used for the liquid scintillator material 5. The light guide structure 3 may be arranged to have a lower refractive index than the liquid scintillator material 5. The lower refractive index of the light guide structure 3 may enable the light guide structure 3 to act as a wave guide and guide photons generated within the liquid scintillator material 5 along a length of the columnar discontinuity 7.

The liquid scintillator material 5 may comprise any suitable liquid which may be configured to generate photons in response to incident X-rays. The liquid scintillator material 5 may comprise one or more scintillators dissolved in a solvent. In some examples the liquid scintillator material 5 may comprise primary scintillators. The primary scintillators may be configured to convert incident X-rays into photons. The photons generated by the primary scintillators may be detected by a photodetector.

In some examples the liquid scintillator material 5 may comprise both a primary scintillator and a secondary scintillator. The secondary scintillator may be configured to convert the photons generated by a primary scintillator into photon with a different wavelength. The secondary scintillator may be used to improve the efficiency of the liquid scintillator material 5 and/or to shift the wavelength of the photons generated by the primary scintillator.

Materials which may be suitable for use as primary scintillators may comprise butyl PBD 2-[4-biphenylyl]-5-[4-*tert*-butylphenyl]-1,3,4-oxadiazole), 2-(4'-tert-butylphenyl)-5-(4"-biphenylyl)-1,3,4-oxadiazole (B-PBD), naphthalene, *p*-terphenyl, PPO 2,5-diphenyloxazole or any other suitable material. Materials which may be suitable for use as secondary scintillators may comprise X BBQ (7H-benzimidazo[2,1-a]benz[de]isoquinoline-7-one), benzene (POPOP) (1,4-bis[5-phenyloxazol-2-yl]benzene), Bis-MSB (1,4-bis[2-methylstyryl]-benzene), TPB (1,1,4,4-tetraphenyl-1,3-butadiene). In some examples the scintillators may be added to an aromatic solvent such as benzene, xylene, naphthalene, toluene, phenylcyclohexane, triethylbenzene, decalin or any other suitable material. In some examples the scintillators may be added to polymeric materials such as PEN (polyethylene naphthalate), PMMA (Poly(methyl methacrylate)) or any other suitable material.

The liquid scintillator material 5 may be positioned within the discontinuities 7 in the light guide structure 3. As the discontinuities 7 within the light guide structure are columnar the liquid scintillator material 5 is arranged in a plurality of columns 9. The columns 9 of the liquid scintillator material 5 are supported by the light guide structure. The columns 9 may have a high aspect ratio such that the length of the column 9 is longer than the width.

The columns 9 of the liquid scintillator material 5 may have any suitable shape. The shapes of the columns 9 of the liquid scintillator material 5 may be determined by the shapes of the discontinuities 7 in the light guide structure 3. In the example of Figs. 1A and 1B the columns 9 of the liquid scintillator material 5 have a hexagonal cross section. Other shapes may be used in other examples of the disclosure. In the examples of Figs. 1A and 1B each of the columns 9 of liquid scintillator material 5 have the same size and shape. In other examples some of the columns 9 of liquid scintillator material 5 could have different sizes and/or shapes compared to other columns within the apparatus 1.

The liquid scintillator material 5 may be liquid while the apparatus 1 is being formed but may solidify after the apparatus has been formed.

The plurality of columns 9 of the liquid scintillator material 5 may be arranged in an array 11. An example of an array of columns 9 is shown in Fig. 1B. In the example of Fig. 1B the array 11 is a regular array. The array 11 of Fig. 1B comprises a plurality of rows 13 of columnar discontinuities 7. The rows 13 are provided adjacent to each other so that there are no gaps in the apparatus 1. The columnar discontinuities 7 are tessellated together so that there are no gaps in the apparatus 1.

Fig. 1C illustrates another examples array 11 of columns 9 of liquid scintillator material 5. In the example of Fig. 1C the array 11 is an irregular array. In the irregular array 11 the spacing between the columns 9 is variable across the array 11. The array 11 may be random or pseudo random or may be arranged in another suitable pattern.

In the example of Fig. 1C the columns 9 have a circular shape. It is to be appreciated that other shapes of columns 9 could be used in other examples of the disclosure.

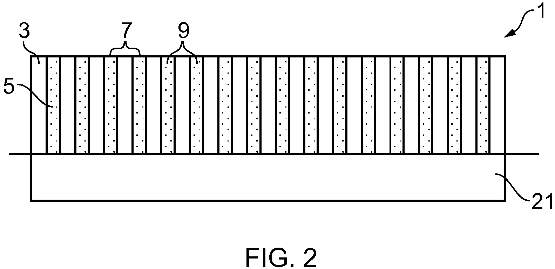

Fig. 2 illustrates an example apparatus 1 coupled to a photodetector 21. The example apparatus 1 may be similar to the apparatus 1 of Figs. 1A and 1B and corresponding reference numerals are used for corresponding features.

The photodetector 21 may comprise any means which may be configured to convert incident photons into an electrical signal. The photodetector 21 may be coupled to the apparatus 1 so that photons generated by the liquid scintillator material 5 are incident on the photodetector 21. This enables the photodetector 21 to provide an electrical signal indicative of X-rays incident on the apparatus 1.

In some examples the photodetector 21 may be coupled to the apparatus 1 so that the photodetector 21 is positioned adjacent to the apparatus 1 with no intervening components. In such examples photons generated by the liquid scintillator material 5 may be provided directly to the photodetector 21.

In other examples the photodetector 21 may be coupled to the apparatus 1 so that one or more intervening components are provided between the apparatus 1 and photodetector 21. The intervening components may comprise one or more optical components which may be configured to ensure that an optimal number of photons are incident on the photodetector 21. For example the optical components may be configured to match the refractive index between adjacent components and reduce reflection of the photons.

In some examples the photodetector 21 may comprise graphene. The graphene photodetectors may be highly efficient at converting the incident photons into electrical signals. This may enable a very sensitive photodetector to be provided. By using a highly efficient photodetector 21 such as a graphene based photodetector this may enable less efficient scintillators materials to be used. This may compensate for the reduction in efficiency of a liquid scintillator material 5 compared to CsI:Tl or other similar materials.

In some examples the photodetector 21 may comprise a plurality of pixels. The pixels may have different shapes compared to the columns of the liquid scintillator material 5. For instance where the liquid scintillator material 5 is arranged in hexagonal columns the photodetector 21 may comprise rectangular pixels. Having different shaped columns 9 compared to the pixels may reduce Moire effects between the apparatus 1 and the photodetector 21. This may make alignment of the apparatus 1 relative to the photodetector 21 less critical.

In other examples the pixels of the photodetector 21 may have the same or similar shape compared to the columns of the liquid scintillator material 5. In such examples the array 11 of columns 9 of the liquid scintillator material 5 may be aligned with the array of pixels in the photodetector 21 so as to reduce Moire effects and enable high resolution images to be obtained.

The apparatus 1 may be removably coupled to the photodetector 21. The apparatus 1 may be removably coupled to the photodetector 21 so that a user can detach the apparatus 1 and replace it with a different apparatus 1. This may enable a user to change the apparatus 1 which is used. For instance if the liquid scintillator material 5 degrades or decomposes after a period of time the apparatus 1 can be replaced.

In some examples the apparatus 1 may be coupled to the photodetector 21 so that both the light guide structure 3 and the liquid scintillator material 5 can be removed from the photodetector 21. In some examples the apparatus 1 may be coupled to the photodetector 21 so that the liquid scintillator material 5 may be removed while the light guide structure 3 remains coupled to the photodetector 21. In such examples the light guide structure 3 may comprise means for removing the liquid scintillator material 5 from the apparatus 1. The means could comprise a valve or any other suitable device.

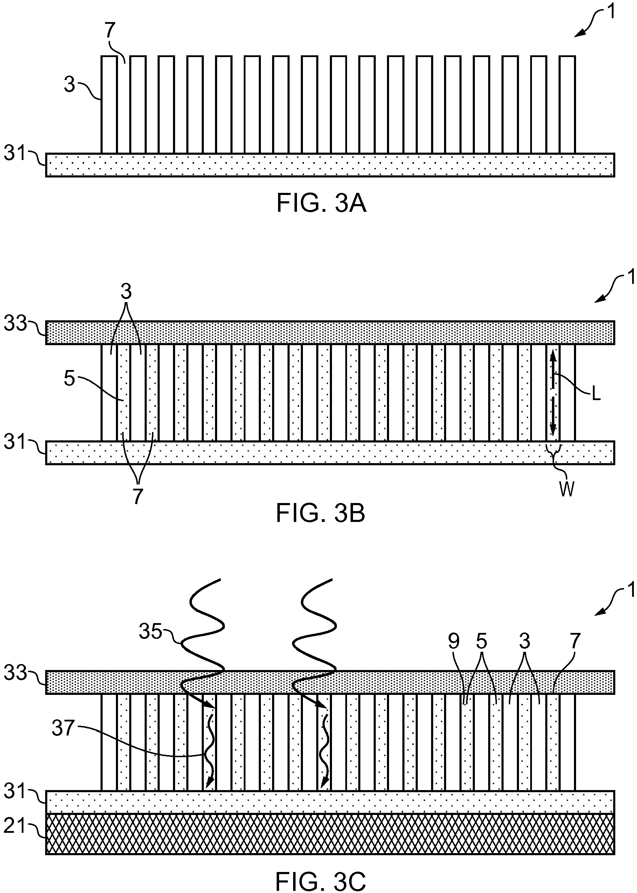

Figs. 3A to 3C illustrate methods of forming example apparatus 1. The apparatus 1 may be as described with reference to Figs. 1A to 2 and so corresponding reference numerals are used for corresponding features.

In Fig. 3A the light guide structure 3 is formed. The light guide structure 3 is formed on a substrate 31. The substrate 31 may comprise any suitable material. The material which is used for the substrate 31 may be determined by the material which is to be used for the light guide structure 3. In some examples the substrate 31 may be flexible. This may enable a flexible apparatus 1 to be provided.

In the example of Figs. 3A to 3C the substrate 31 may be transparent to photons. This may enable photons which are generated by the apparatus 1 to be provided to a photodetector 21.

In the example of Figs. 3A to 3C the light guide structure 3 is formed with a plurality of columnar discontinuities 7. The discontinuities 7 extend through the entire thickness of the light guide structure 3. The discontinuities 7 extend all the way to the substrate 31.

The light guide structure 3 may be formed by any suitable method. The method that is used to form the light guide structure 3 may be determined by the material that is used for the light guide structure 3 and/or the material that is used for the substrate 31.

In the example of Figs. 3A to 3C the light guide structure 3 may comprise polymer material. The polymer material may comprise any polymer which has a lower refractive index than the liquid scintillator material 5. For instance, the polymer used for the light guide structure 3 could comprise a fluoro-polymer or any other suitable material having a low refractive index. In such examples the substrate 31 may also comprise a polymer. The light guide structure 3 may be formed by embossing a plurality of layers of polymer onto the polymer substrate 31. The polymer could be embossed using any suitable technique such as micro-replication, nano-imprinting, injection moulding or any other suitable process.

In Fig. 3B the liquid scintillator material 5 is provided within the light guide structure 3. The liquid scintillator material 5 is provided to fill the discontinuities 7 within the light guide structure 3. The liquid scintillator material 5 may comprise any suitable material as described above. As the discontinuities 7 have a columnar shape the liquid scintillator material 5 forms a plurality of columns. The columns 9 may have a high aspect ratio so that the length L of the columns 9 is much greater than the width w.

Once the liquid scintillator material 5 is provided within the light guide structure 3 then a sealing layer 33 is provided overlaying the light guide structure. The sealing layer 33 may be configured to prevent ingress of fluid or other contaminants into the liquid scintillator material 5.

The sealing layer 33 may be configured to be transparent to X-rays to enable incident X-rays to be transmitted to the liquid scintillator material 5. For instance, in some examples, the sealing layer 33 could comprise a metal. In some examples the sealing layer 33 may be reflective to photons to enable photons which are generated by the liquid scintillator material 5 to be reflected downwards towards the substrate 31. In other examples a reflective layer may be provided overlaying the sealing layer 33.

In Fig. 3C the apparatus 1 is coupled to a photodetector 21. In the example of Figs. 3A to 3C the photodetector 21 is coupled to the substrate 31. The apparatus 1 may be removably coupled to the photodetector 21 as described above.

When the apparatus 1 is in use X-rays 35 which are incident on the apparatus 1 may pass through the sealing layer 33 into the liquid scintillator material 5. The liquid scintillator material 5 generates photons 37 in response to the incident X-rays 35. The photons which are generated by the liquid scintillator material 5 may be generated isotropically. However as the light guide structure 3 has a higher refractive index than liquid scintillator material 5 this enables total internal reflection of the photons 37 and enables them to be guided along the length of the column 9 of liquid scintillator material 5. If the photons 37 are generated in an upwards direction then they may be reflected downwards towards the photodetector 21 by the reflective sealing layer 33. The photons 37 may then pass through the substrate 31 and be detected by the photodetector 21.

It is to be appreciated that variations to the process of Figs. 3A to 3C may be made in other examples. For instance, in some examples the liquid scintillator material 5 may be cooled after it has been provided within the discontinuities 7 of the support structure. If the liquid scintillator material 5 below the melting point then the liquid scintillator material 5 may solidify so that the sealing layer 33 need not be provided.

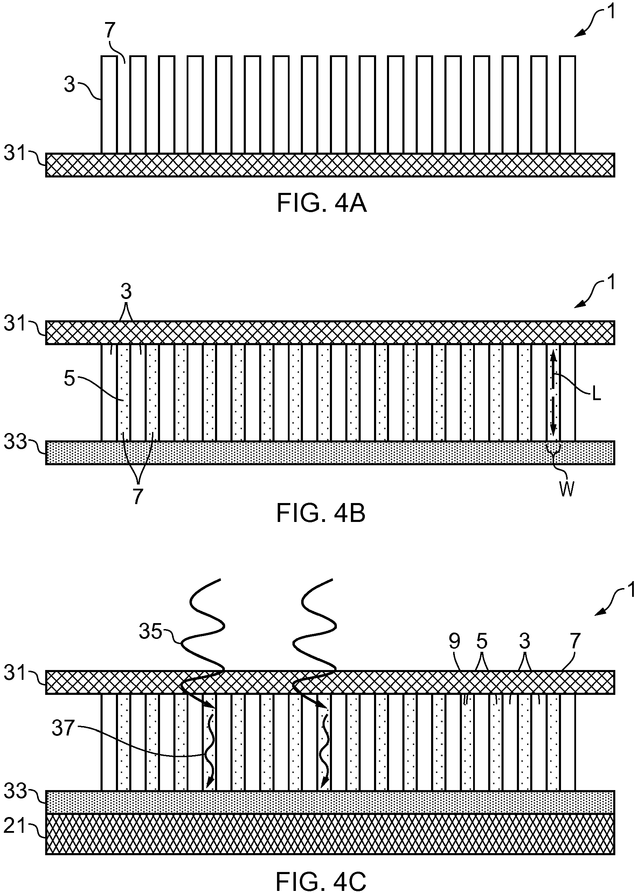

Figs. 4A to 4C illustrate methods of forming another example apparatus 1. The apparatus 1 may be similar to the apparatus 1 of Figs. 1A to 3C and so corresponding reference numerals are used for corresponding features.

In Fig. 4A the light guide structure 3 is formed on a substrate 31. In the example of Figs. 4A to 4C the light guide structure 3 comprises a metal oxide such as aluminium oxide. In such examples the substrate 31 may comprise aluminium or any other suitable material. In the example of Figs. 4A to 4C the substrate 31 may be transparent to X-rays but may be configured to reflect photons.

The aluminium oxide light guide structure 3 may be formed using any suitable technique for patterning metal oxides. The aluminium oxide light guide structure 3 may be formed in situ on the surface of the substrate 31. For instance, in some examples electrochemical reactions may be used to create a porous structure within anodic aluminium oxide. This technique may be suitable to create a porous structure over a large surface area.

The light guide structure 3 comprises a plurality of discontinuities 7 which may be as described above.

In Fig. 4B the liquid scintillator material 5 is provided within the light guide structure 3. The liquid scintillator material 5 is provided to fill the discontinuities 7 within the light guide structure 3. The liquid scintillator material 5 may comprise any suitable material as described above.

Once the liquid scintillator material 5 is provided within the light guide structure 3 then a sealing layer 33 is provided overlaying the light guide structure. The sealing layer 33 may be configured to prevent ingress of fluid or other contaminants into the liquid scintillator material 5.

In the example of Figs. 4A to 4C the sealing layer 33 may be configured to be transparent to photons to enable photons generated by the liquid scintillator material 5 to be transmitted to a photodetector 21. The sealing layer 33 may comprise any suitable transparent material.

Once the sealing layer 33 has been provided on the apparatus 1 the apparatus 1 may be inverted, as illustrated in Fig. 4B, so that the substrate 31 is provided as an upper surface of the apparatus 1 and the sealing layer 33 is provided as a lower surface.

In Fig. 4C the apparatus 1 is coupled to a photodetector 21. In the example of Figs. 4A to 4C the photodetector 21 is coupled to the sealing layer 33.

When the apparatus 1 is in use X-rays 35 which are incident on the apparatus 1 may pass through the substrate 31 into the liquid scintillator material 5. The liquid scintillator material 5 generates photons 37 in response to the incident X-rays 35. The photons which are generated by the liquid scintillator material 5 may be generated isotropically. However as the aluminium oxide light guide structure 3 has a lower refractive index than liquid scintillator material 5 that is used this enables total internal reflection of the photons 37 and enables them to be guided along the length of the column 9 of liquid scintillator material 5. If the photons 37 are generated in an upwards direction then they may be reflected downwards towards the photodetector 21 by the reflective substrate 31. The photons 37 may then pass through the sealing layer 33 and be detected by the photodetector 21.

In some examples the liquid scintillator material 5 that is used may have a higher refractive index than the aluminium oxide light guide structure 3. In such examples a coating may be provided on the light guide structure 3. The coating may comprise a material which has a lower refractive index than liquid scintillator material 5. The coating may comprise a material such as fluorine.

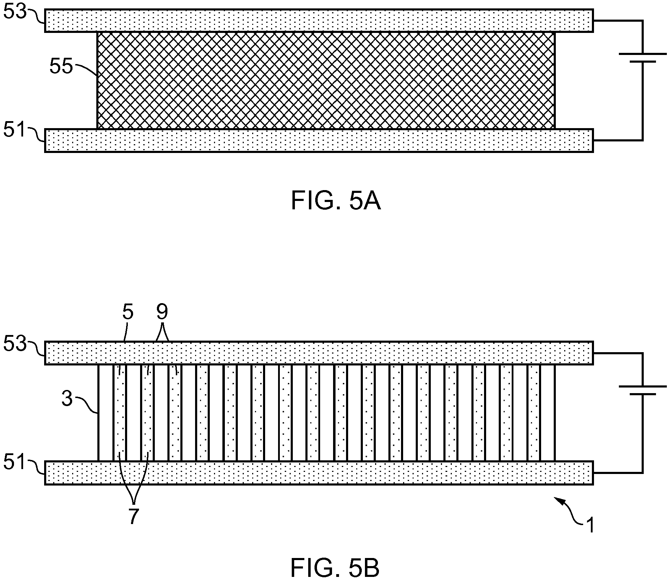

Figs. 5A and 5B illustrate a method of forming another example apparatus 1. The apparatus 1 may be similar to the apparatus 1 of Figs. 1A to 3C and so corresponding reference numerals are used for corresponding features.

In Fig. 5A a first electrically conducting substrate 51 and a second electrically conducting substrate 53 are provided.

The first electrically conductive substrate 51 may be transparent to photons. In some examples the first electrically conductive substrate could comprise a layer of transparent conductor mounted on a transparent support material such as glass or plastic. The transparent conductor could comprise any suitable materials such as indium tin oxide (ITO), fluorine doped tin oxide (FTO), aluminium doped zinc, silver nanowires or any other suitable material.

The second electrically conductive substrate 53 may be transparent to X-rays. In such examples the second electrically conductive substrate 53 may comprise carbon or a metallic material such as aluminium.

A solution 55 comprising at least two immiscible liquids is provided between the two electrically conducting substrates 51, 53. The solution 55 may comprise any materials which may be used to form the light guide structure 3 and the columns of liquid scintillator material 5.

In some examples one of the immiscible liquids in the solution 55 comprises a polymer which may be configured to form the light guide structure 3 of the apparatus 1. In some such examples another immiscible liquid within the solution 55 may form the liquid scintillator material 5 of the apparatus 1. In other examples the immiscible liquid within the solution 55 which does not form the light guide structure may comprise a sacrificial liquid. The sacrificial liquid may be removed after the light guide structure 3 has been formed and may be replaced with the liquid scintillator material 5.

In Fig. 5B a voltage is applied between the two electrically conducting substrate 51, 53. The applied voltage creates an electric field which enables aligned phase separation of the two immiscible liquids within the solution 55. The applied electric field causes alignment of the solution 55 as it separates into columns comprising different liquids. The applied electric field causes the solution 55 to separate into a vertically aligned light guide structure 3 comprising a plurality of discontinuities 7 formed from a first liquid while the second liquid is provided as a plurality of columns 9 within the discontinuities in the light guide structure 3. In the example illustrated in Fig. 5B the second liquid comprises the liquid scintillator material 5.

The columns 9 that are formed are aligned with the direction of the electric field. In the example of Fig. 5B the columns are perpendicular or substantially perpendicular to the electrically conducting substrates 51, 53. It is to be appreciated that other techniques may be used to create vertically aligned columns 9 in other examples of the disclosure. For instance, in com examples the surface energy of the substrates 51, 53 may be modified. This may be followed by thermal annealing to create vertically aligned columns 9.

Any suitable means may be used to control the size and/or shape of the columns 9 and the size and/or shape of the discontinuities 7 that are formed in the light guide structure 3. In some examples the size and/or shape of the columns 9 and discontinuities 7 may be controlled by controlling the composition of the immiscible liquids within the solution 55. In some exampled the size of the columns 9 may be controlled by using polymeric materials with different molecular weights and/or block-copolymer materials in which the size and number of hydrophilic to hydrophobic blocks can be used to control the resulting phase separation morphology and the columns 9 produced. In such examples the block co-polymers may comprise two or more chemically distinct polymers linked together by a covalent bond at one end. The block co-polymers have the ability to self-assemble into a variety of different phase morphologies. The chemically distinct polymers could comprise polystyrene and PMMA; polystyrene and polyimide; or polyfluorostyrene (PFS) and polylactic (PLA) or any other suitable pairs of polymers. In some examples the block co-polymer could comprise a PFS-PLA copolymer, (poly(4-fluorostyrene-r-styrene)-b-poly(d,l-lactide) with a molecular weight Mw =23:8 kg mol-1, and a polydispersity index of Mw/Mn=1.10.),

In some examples the electrically conducting substrates 51, 53 may be patterned to control the shapes of the columns 9 of the liquid scintillator material 5 that are formed. In such examples one or both of the electrically conducting substrates 51, 53 may be patterned.

In some examples once the light guide structure 3 has been formed the light guide structure 3 may be cured to increase cross linking of the material within the light guide structure 3. The light guide structure 3 could be UV cured, chemically cured or thermally cured or any other suitable type of curing may be used. This may ensure that the support strcture 3 remains the same size and shape.

In some examples the first electrically conductive substrate 51 could be replaced with the drive electrode of the photodetector 21. In such examples the drive electrodes of the pixel array of the photodetector 21 may be used to generate the electric field used to create the phase separation within the solution 55. This may enable the columns 9 of the liquid scintillator material 5 to be aligned with the pixels of the photodetector 21. Aligning the pixels of the photodetector may improve the efficiency of the apparatus as it may optimise the number of photons which are incident on the photodetector.

In the example of Figs. 5A and 5B the solution comprises at least two immiscible liquids which are separated into different liquid phases when the electric field is applied. In other examples the solution 55 could comprise a block co-polymer in which the liquid scintillator material 5 is formed from one block while the light guide structure 3 is formed from another block of the same polymer. The two blocks could be linked by a shared polymer backbone. In such examples the columnar structure could be formed on a scale of nanometers. For instance the width of the columns of liquid scintillator material 5 could be of the order of nanometers.

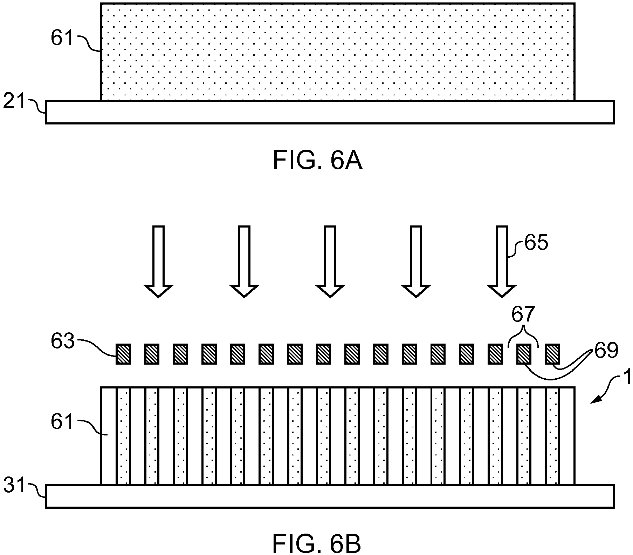

Figs. 6A and 6B show another example of forming apparatus 1. In the example of Figs. 6A and 6B the columnar discontinuities 7 in the light guide structure 3 are formed by UV patterning.

In Fig. 6A a photodetector 21 is provided. A mixture 61 is provided on the photodetector 21. The mixture 61 may comprise a liquid scintillator material 5 provided within an active material such as PMMA or any other suitable material. The mixture 61 could be coated on the photodetector 21 using any suitable means. The mixture 61 could be coated in a layer which is thick enough to enable columnar discontinuities 7 to be formed.

In Fig. 6B a mask 63 is positioned overlaying the mixture 61. The mask 63 may comprises a plurality of first portions 67 which are transparent to ultraviolet light 65 and a plurality of second portions 69 which are opaque to ultraviolet light 65. When the apparatus 1 is exposed to ultraviolet light 65 the ultraviolet light 65 is incident on the mixture 61 underneath the first portions 67 but not the mixture underneath the second portions 69. This causes the mixture 61 underneath the first portions 67 to harden and solidify while the mixture under the second portions 69 remains a liquid. The hardened portions may form the light guide structure 3 of the apparatus 1 and the liquid portions may form the liquid scintillator material 5.

In some examples the exposure to ultraviolet light 65 may be used to control the refractive index of the light guide structure 3 that is formed. In general the cured regions of the mixture 61 have a larger refractive index than uncured regions. A light guide structure 3 can be formed by curing vertically aligned columns of the mixture 61 to increase the refractive index. This leaves uncured mixture 61 with lower refractive index surrounding the light guide structure 3.

The shapes of the light guide structure 3 and the liquid scintillator material 5 may be determined by the shape and/or sizes of the respective portions 67, 69 of the mask 63. Different shapes and/or sizes of the columns of liquid scintillator material 5 may be provided by providing different shaped masks 63.

The mask 63 may ensure that the columns 9 of liquid scintillator material 5 that are formed are perpendicular, or substantially perpendicular to the photodetector 21. Having columns 9 of liquid scintillator material 5 perpendicular, or substantially perpendicular to the photodetector 21 may ensure that the maximum number of photons 37 are coupled from the liquid scintillator material 5 to the photodetector 21. This may also reduce cross talk between different columns 9 of liquid scintillator material 5 by ensuring that photons generated by a column 9 of liquid scintillator material 5 are incident on the pixel of the photodetector 21 which is aligned with that column. This may enable higher resolution images to be provided. This may also allow the columns of liquid scintillator material 5 to be aligned relative to the pixels of the photodetector 21 so as to reduce Moire effects between the columns 9 of liquid scintillator material 5 and the photodetector 21.

In alternative examples the mask may be configured so that first portions 67 of the mask 63 may allow particles to pass through and second portions 69 of the mask 63 prevent particles from passing through. When the apparatus is exposed to the particles the particles become embedded in the mixture 61. The mask 63 causes the particles to be embedded in the mixture 61 underneath the first portions 67. This causes the mixture 61 underneath the first portions 67 to harden and solidify while the mixture under the second portions 69 remains a liquid. The particles may comprise any material which may be arranged to block X-rays and create the light guide structure portions of the apparatus 1.

It is to be appreciated that other examples could be used to provide apparatus 1 in other examples of the disclosure. For instance, in some examples the light guide structure 3 may be formed by patterning techniques such as screen or stencil printing. The liquid scintillator material 5 may then be provided in discontinuities 7 provided within the light guide structure 3.

In such examples the light guide structure 3 may be patterned using a viscous ink in order to enable a thick layer of the light guide structure 3 to be printed. The layer of the light guide structure 3 must be thick enough to enable the columnar discontinuities 7 with a high aspect ratio to be formed.

The light guide structure 3 may be patterned in any suitable pattern. In some examples the pattern of the light guide structure 3 may be designed so that the columnar discontinuities 7 have the same dimensions and periodicity as the array of pixels in the photodetector 21. This may improve the efficiency of the apparatus 1.

Once the light guide structure 3 has been formed the liquid scintillator material 5 may be provided within the columnar discontinuities 7. Any suitable technique may be used to provide the liquid scintillator material 5 within the columnar discontinuities 7.

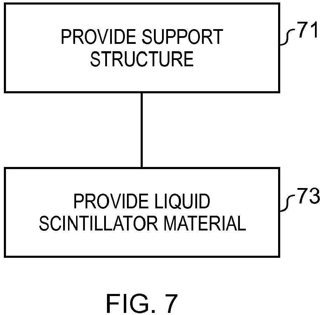

Fig. 7 illustrates a method. The method may be used to provide an apparatus 1 as described above. The method comprises, at block 71 providing a light guide structure 3 comprising a plurality of columnar discontinuities 7. The method also comprises, at block 73, providing liquid scintillator material 5 for generating photons in response to incident X-rays wherein the liquid scintillator material 5 is provided in a plurality of columns 9 within the columnar discontinuities 7 of the light guide structure 3. The light guide structure 3 may have a higher refractive index than the liquid scintillator material 5 so that photons 37 generated by the liquid scintillator material 5 are guided along a length of the columns 9 of liquid scintillator material 5.

Examples of the disclosure provide apparatus 1 for detecting X-rays 35 comprising a liquid scintillator material 5. As the liquid scintillator material 5 is provided in columns 9 adjacent to a light guide structure 3 with a higher refractive index the photons 37 generated by the liquid scintillator material 5 can be guided towards a photodetector 21. Enabling the photons 37 to be guided along a length of columns 9 of the liquid scintillator material 5 may improve the efficiency of the apparatus 1 and may reduce cross talk between adjacent scintillator portions and provide improved resolution.

The use of the light guide structure 3 also enables the liquid scintillator material 5 to provided in a thick layer. As a thick layer is provided this may improve the efficiency of the apparatus 1 and enable more X-rays 35 to be converted into photons 37 that are detected by the photodetector 21.

In some examples the apparatus 1 may be removably connected to a photodetector 21 or the liquid scintillator material 5 may be removed from the light guide structure 3. As the liquid scintillator material 5 may have a lower cost than materials such as Csl :Tl and the apparatus 1 may be easier to manufacture this may enable the apparatus 1 to be replaced if it is contaminated or has degraded after a period of time.

The apparatus 1 may be formed having columns of liquid scintillator material 5 in any suitable size or shape. This may enable the columns of liquid scintillator material 5 to have a shape which is different to the pixels of the photodetector 21 so as to reduce effects such as Moire effects which may reduce the resolution of images obtained by the photodetector 21.

As the liquid scintillator material 5 may be provided on a flexible substrate 31 this may enable flexible apparatus 1 for detecting X-rays to be formed. This may also reduce the weight and improve the sensitivity to mechanical shock of the apparatus 1 for detecting X-rays.

Suitable apparatus 1 may be formed using different methods such as the methods described above. These methods may enable low cost apparatus 1 for detecting X-rays to be formed. At least some of the example methods described enable the apparatus 1 to be formed at low temperatures. The temperatures at which apparatus 1 according to the disclosure may be formed may be low compared to apparatus 1 comprising CsI : TI or other similar scintillators. This may enable the apparatus 1 to be formed directly on top of a photodetector 21. This may provide for a simple and low cost assembly process.

In the above description the term "coupled" means operationally coupled. Any number of intervening components may be provided including no intervening components.

The term "comprise" is used in this document with an inclusive not an exclusive meaning. That is any reference to X comprising Y indicates that X may comprise only one Y or may comprise more than one Y. If it is intended to use "comprise" with an exclusive meaning then it will be made clear in the context by referring to "comprising only one..." or by using "consisting".

In this brief description, reference has been made to various examples. The description of features or functions in relation to an example indicates that those features or functions are present in that example. The use of the term "example" or "for example" or "may" in the text denotes, whether explicitly stated or not, that such features or functions are present in at least the described example, whether described as an example or not, and that they can be, but are not necessarily, present in some of or all other examples. Thus "example", "for example" or "may" refers to a particular instance in a class of examples. A property of the instance can be a property of only that instance or a property of the class or a property of a subclass of the class that includes some but not all of the instances in the class. It is therefore implicitly disclosed that a features described with reference to one example but not with reference to another example, can where possible be used in that other example but does not necessarily have to be used in that other example.

Although embodiments of the present invention have been described in the preceding paragraphs with reference to various examples, it should be appreciated that modifications to the examples given can be made without departing from the scope of the invention as claimed. For instance in some examples a PEN substrate could be used to create columnar structures by embossing. The PEN is a polymeric scintillator material, and being surrounded by air would enable wave guiding of light towards a detector.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An apparatus comprising:
a light guide structure comprising a plurality of columnar discontinuities;
liquid scintillator material provided to generate photons in response to incident X-rays wherein the liquid scintillator material is provided in a plurality of columns within the columnar discontinuities of the light guide structure;
wherein the light guide structure has a lower refractive index than the liquid scintillator material so that photons generated by the liquid scintillator material are guided along a length of the columns of liquid scintillator material.

2. An apparatus as claimed in any preceding claim wherein the apparatus is coupled to a photodetector.

3. An apparatus as claimed in any preceding claim wherein the apparatus is removably coupled to a photodetector.

4. An apparatus as claimed in any of claims 2 to 3 wherein the photodetector comprises graphene.

5. An apparatus as claimed in any of claims 2 to 4 wherein the columns of liquid scintillator material are arranged in an array which has a different shape to an array of pixels within the photodetector.

6. An apparatus as claimed in any preceding claim wherein a plurality of columns of liquid scintillator material are arranged in an irregular array.

7. An apparatus as claimed in any preceding claim comprising a reflective layer configured to reflect photons into the column of liquid scintillator material.

8. An apparatus as claimed in any preceding claim wherein the apparatus is flexible.

9. An apparatus as claimed in any preceding claim comprising a valve configured to enable the liquid scintillator material to be removed from the light guide structure.

10. An apparatus as claimed in any preceding claim wherein the light guide structure comprises polymer.

11. An apparatus any of claims 1 to 9 wherein the light guide structure comprises aluminium oxide.

12. An apparatus as claimed in any of claims 1 to 9 wherein the columns of the liquid scintillator material are formed by at least one of phase separation, ultra violet patterning.

13. An apparatus as claimed in any of claims 1 to 9 wherein the light guide structure is formed by at least one of printing, embossing, nano-imprinting, embedding particles within a mixture comprising liquid scintillator material.

14. An electronic device comprising an apparatus as claimed in any of claims 1 to 13.

15. A method comprising:
providing a light guide structure comprising a plurality of columnar discontinuities;
providing liquid scintillator material for generating photons in response to incident X-rays wherein the liquid scintillator material is provided in a plurality of columns within the columnar discontinuities of the light guide structure;
wherein the light guide structure has a lower refractive index than the liquid scintillator material so that photons generated by the liquid scintillator material are guided along a length of the columns of liquid scintillator material.
